# EUROPÄISCHE PATENTSCHRIFT

(11) **EP 2 689 530 B1**
(45) Veröffentlichungstag und Bekanntmachung des Hinweises auf die Patenterteilung: **08.11.2017**
(21) Anmeldenummer: 12706463.2
(22) Anmeldetag: 21.02.2012
(51) Int. Cl.: H02P 27/06

(54) **ANTRIEBSSYSTEM UND VERFAHREN ZUM BETREIBEN EINES ANTRIEBSSYSTEMS**
DRIVE SYSTEM AND METHOD FOR OPERATING A DRIVE SYSTEM
SYSTÈME D'ENTRAÎNEMENT ET PROCÉDÉ DE FONCTIONNEMENT D'UN SYSTÈME D'ENTRAÎNEMENT

(30) Priorität: 22.03.2011 DE 102011014753
(43) Veröffentlichungstag der Anmeldung: 29.01.2014
(73) Patentinhaber: Sew-Eurodrive GmbH & Co. KG, 76646 Bruchsal (DE)
(72) Erfinder: SIMON, Olaf, 76646 Bruchsal (DE); SCHMIDT, Josef, 76676 Graben-Neudorf (DE); MEYROWITZ, Gunnar, 26123 Oldenburg (DE)
(86) Internationale Anmeldenummer: PCT/EP2012/000750
(87) Internationale Veröffentlichungsnummer: WO 2012/126560

(56) Entgegenhaltungen:
- WO-A1-02/27913
- DE-A1- 19 908 045
- DE-A1-102005 027 502
- DE-A1-102008 032 805
- DE-A1-102008 037 737
- DE-A1-102009 031 466
- JP-A- 2008 306 811

## Beschreibung

Die Erfindung betrifft ein Antriebssystem und ein Verfahren zum Betreiben eines Antriebssystems.

Es ist bekannt, als Antriebssystem einen umrichtergespeisten Motor zu verwenden, wobei der Umrichter mit dem Motor über ein Kabel verbunden ist.

Aus der DE 199 08 045 A1 ist ein Antriebssystem bekannt, das einen Elektromotor aufweist, welcher von einem Umrichter gespeist wird, wobei am Motor ein Sensor und ein Aktor angeordnet ist und der Motor mit dem Umrichter mittels Hybridkabel verbunden sind.

Aus der DE 10 2008 032 805 A1 ist ein ebensolches System bekannt.

Aus der DE 10 2009 031 466 A1 ist ein Antriebssystem bekannt, wobei das Hybridkabel über eine Steckverbindung mit dem Motor oder über eine andere Steckverbindung mit dem Umrichter verbunden ist.

Aus der JP 2008 306811 A ist ein Antriebssystem bekannt, wobei die Signalleitungen als differentielle Signalübertragungsleitungen fungieren.

Aus der DE 10 2008 037 737 A1 ist ein Antriebssystem bekannt, wobei im Motor eine Leiterplatte angeordnet ist und auf der Leiterplatte ein Halbleiterschalter bestückt ist.

Aus der DE 10 2005 027 502 A1 ist ein Antriebssystem bekannt, wobei im Motor ein ansteuerbarer Halbleiterschalter angeordnet ist.

Aus der WO 02/27913 A1 ist ein Antriebssystem mit einem Transformator bekannt, der zwischen Motor und Schwachstromleitungen des Hybridkabels angeordnet ist.

Aus der DE 10 2005 006 286 A1 ist als nächstliegender Stand der Technik ein elektrischer Antrieb bekannt.

Aus der DE 10 2008 010 913 A1 ist ein Elektromotor bekannt.

Aus der DE 196 40 172 A1 ist eine Übertrager-Leistungskopplung bekannt.

Der Erfindung liegt daher die Aufgabe zugrunde, eine ein Antriebssystem weiterzubilden, wobei es mit geringem Installationsaufwand in einer Anlage installierbar sein soll.

Erfindungsgemäß wird die Aufgabe bei dem Antriebssystem nach den in Anspruch 1 und bei dem Verfahren nach den in Anspruch 6 angegebenen Merkmalen gelöst.

Wichtige Merkmale der Erfindung bei dem Antriebssystem sind, dass das Antriebssystem zumindest einen Elektromotor aufweist, welcher von einem Umrichter gespeist wird,
wobei am Motor zumindest ein Sensor und ein Aktor angeordnet sind,
wobei der Umrichter und der Motor über ein Hybridkabel verbunden sind,
wobei das Hybridkabel Starkstromleitungen und Schwachstromleitungen aufweist,
wobei als Schwachstromleitungen zumindest zwei oder nur zwei Signalleitungen und zwei Versorgungsleitungen, insbesondere zur 24 Volt -Versorgung, verwendet sind,
wobei über die Signalleitungen die von den Sensoren erfassten Werte und, - insbesondere zeitlich versetzt - , die für den Aktor bestimmten Ansteuerdaten übertragbar sind.

Von Vorteil ist dabei, dass ein einziges Hybridkabel verwendbar ist und somit nur ein geringer Installationsaufwand ermöglicht ist. Da einem Kabel nur ein umrichterseitiger Steckverbinder und/oder ein motorseitiger Steckverbinder zugeordnet wird, sind erhebliche Kosten einsparbar und die Verkabelung einer Anlage vereinfachbar, also übersichtlicher installierbar.

Bei einer vorteilhaften Ausgestaltung ist am Motor ein Temperatursensor, insbesondere ein in den Statorwicklungen des Motors angeordneter Temperatursensor, und/oder ein Winkelsensor angeordnet und ist als Aktor eine elektromagnetisch betätigbare Bremse, deren Bremsmoment der Rotorwelle des Motors zuleitbar. Von Vorteil ist dabei, dass verschiedene Sensoren verwendbar sind und die erfassten Sensordaten zusammen, also ein digitaler Datenstrom, dem Umrichter und dessen Steuerelektronik zuleitbar sind, so dass die erfassten Sensordaten beim Regeln des Antriebs verwendbar sind.

Bei einer vorteilhaften Ausgestaltung ist das Hybridkabel über eine Steckverbindung mit dem Motor und/oder über eine andere Steckverbindung mit dem Umrichter verbunden. Von Vorteil ist dabei, dass ein Hybridsteckverbinderteil verwendbar ist und somit Starkstromleitungen und Schwachstromleitungen gemeinsam verbindbar sind und somit eine einfache Installation ausführbar ist. Es ist ein Mittel zur galvanischen Trennung, insbesondere ein Transformator, zwischen Motor und Leitungen des Hybridkabels, insbesondere Schwachstromleitungen des Hybridkabels angeordnet.

Von Vorteil ist dabei, dass eine verringerte Störeinwirkung von Fremdsignalen oder sonstigem Rauschen erreichbar ist. Insbesondere wird das Signal-Rauschverhältnis verbessert und die Sicherheit erhöht. Es fungieren die Signalleitungen als differentielle Signalübertragungsleitungen. Von Vorteil ist dabei, dass ein besonders hohes Signal-Rauschverhältnis erreichbar ist und die Fehlübertragungen vermindert werden.

Bei einer vorteilhaften Ausgestaltung umfassen die Starkstromleitungen die Motorphasen-Zuleitungen (U,V,W,) und einen Nullleiter (PE). Von Vorteil ist dabei, dass der Starkstrom, also mehr als 1 Ampere übertragbar ist und das Hybridkabel diese Leitungen mit entsprechend großem Querschnitt aufnimmt. Die zu diesem Wechselstrom zugehörige Motorspannung liegt zwischen 100 Volt und 1000 Volt Effektivspannung. Es ist im Motor ein ansteuerbarer Halbleiterschalter angeordnet, dem das Ansteuersignal vom Umrichter über die Signalleitungen des Hybridkabels zuführbar ist und welcher den dem Elektromagneten der Bremse zugeführten Strom steuert. Von Vorteil ist dabei, dass der Strom steuerbar ist und somit von der elektromagnetisch betätigbaren Bremse als steuerbarer Aktor ein Bremsmoment auf die Rotorwelle leitbar ist. Es ist im Motor eine Leiterplatte angeordnet, insbesondere an einem zumindest teilweise gehäusebildenden Teil, und auf der Leiterplatte der Halbleiterschalter bestückt ist,
wobei auf der Leiterplatte auch ein magnetfeldsensitiver Sensor, insbesondere Hallsensor und/oder Wiegandsensor, bestückt ist, welcher einem drehbar gelagerten Teil, insbesondere Lüfter, gegenüberstehend angeordnet ist, wobei am drehbar gelagerten Teil Dauermagnete angeordnet sind, die von dem magnetfeldsensitiven Sensor detektierbar sind beim Vorbeidrehen. Von Vorteil ist dabei, dass eine integrierte kompakte Ausführung ermöglicht ist. Es ist auf der Leiterplatte eine Umsetzer angeordnet, welcher die über die Signalleitungen als digitale Information übertragenen Daten empfängt und daraus die Ansteuerinformationen für den Aktor, insbesondere den Halbleiterschalter, herausfiltert und die von den Sensoren, insbesondere Winkelsensor und Temperatursensor, zugeleiteten Signale als digitalen Datenstrom über die Signalleitungen an den Umrichter leitet. Von Vorteil ist dabei, dass mittels des Umsetzers nur wenige Signalleitungen notwendig sind, nämlich nur eine Datenleitung, die durch die beiden differentiell arbeitenden Signalleitungen realisiert sind.

Bei einer vorteilhaften Ausgestaltung sind im Hybridkabel zwei weitere Signalleitungen angeordnet, so dass das Antriebssystem in sicherheitsgerichteten Anlagen betreibbar ist, insbesondere wobei der digitale Datenstrom redundant übertragen wird oder Prüfinformationen über den digitalen Datenstrom übertragen werden. Von Vorteil ist dabei, dass die Sicherheit in einfacher Weise erhöhbar ist und trotzdem eine einfache Installation erreichbar ist, da nur ein Hybridkabel verwendet ist. Es werden auf den Signalleitungen Daten derart digital codiert übertragen, dass die zeitlichen Abschnitte negativer und positiver Spannung gleich lang sind, insbesondere wobei die zeitlichen Abschnitte jeweils derart kurz sind, dass als Mittel zur galvanischen Trennung verwendete Transformatoren nicht gesättigt werden, wobei auf den Signalleitungen Daten im Manchestercode übertragen werden,
wobei die Daten bidirektional übertragen werden, insbesondere wobei ein hall Duplex Verfahren verwendet werden,
wobei die Daten der Sensoren und Aktoren seriell hintereinander in einem Datenwort übertragen werden.

Von Vorteil ist dabei, dass eine effektive störarme Signalübertragung bidirektional herstellbar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist der Stand der Technik einer Kabelverbindung zwischen einem Frequenzumrichter FU und einem von diesem FU gespeisten Elektromotor gezeigt.
In der Figur 2 ist die erfindungsgemäße Kabelverbindung gezeigt.
In der Figur 3 ist ein Ausschnitt aus einem schematischen Schaltplan gezeigt.

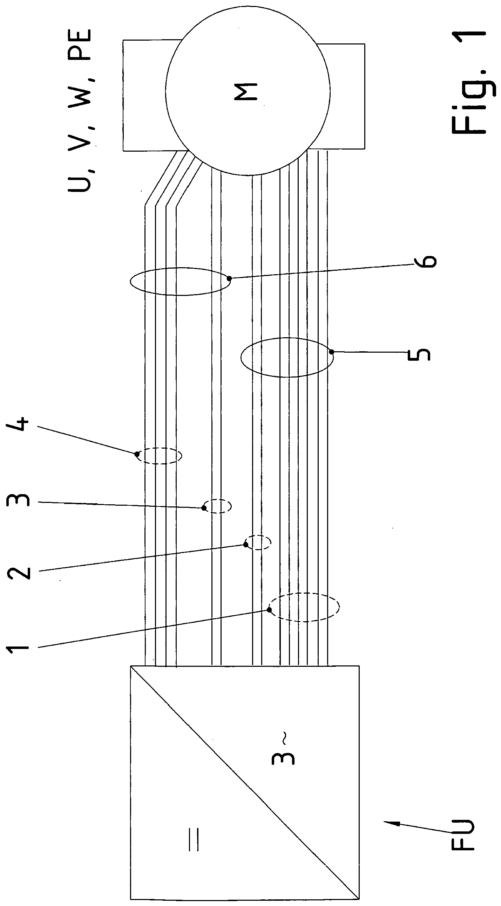

Im Stand der Technik gemäß Figur 1 ist bekannt, zwischen einem Umrichter FU und einem Elektromotor M eine Kabelverbindung zu schaffen, die verschiedene Leitungen für Schwachstrom und Starkstrom aufweist.

Dabei sind für jedes Kabel zumindest ein jeweiliger Steckverbinder vorgesehen, damit das Kabel vom Motor M, insbesondere ein Elektromotor, und/oder vom Umrichter FU trennbar ist. Vorzugsweise wird der Umrichter FU in einem Schaltschrank einer Anlage angeordnet, wohingegen der Motor M im maschinenbaulichen Teil der Anlage, also außerhalb des Schaltschrankes, angeordnet ist. Hierdurch ergeben sich hohe Kabellängen und komplexe Verdrahtungen.

In der Statorwicklung des Motors M ist zumindest ein Temperatursensor oder ein temperaturempfindlicher Schalter angeordnet. Außerdem ist ein Winkelsensor am Motor angeordnet, dessen Signale Information über die Winkellage der Rotorwelle des Elektromotors M enthalten. Des Weiteren ist am Motor M eine Bremse angeordnet, deren Bremskraft auf die Rotorwelle wirkt.

Somit sind als Verkabelung zwischen Umrichter FU und Motor M nicht nur die Starkstromleitungen 4 für die Phasen U, V, W des Motors M samt der zugehörige Nullleitung PE verwendet sondern auch Schwachstromleitungen. Dabei sind beispielhaft die Leitungen 1 zur Übertragung der vom Winkelsensor erfassten Information in einem Hybridkabel 5 zusammen mit den Starkstromleitungen U,V,W, PE angeordnet. Ein weiteres Kabel 6 mit Schwachstromleitungen 3 und 2 ist notwendig, da im Hybridkabel nicht ausreichend viele Schwachstromleitungen integrierbar sind. Dabei übertragen die Schwachstromleitungen 3 die Steuerspannung für die Bremse und die Schwachstromleitungen 2 die analog erfassten Temperaturwerte. Entsprechende Steckverbinder sind vorsehbar.

Zur Übertragung der Signale des Winkelsensors sind 6 oder mehr Leitungen notwendig, da jeder Spur dieses Gebers zwei Leitungen zugeordnet sind und der Geber mehr als eine Spur aufweist. Die Verarbeitung dieser Spursignale erfolgt dann im Umrichter FU.

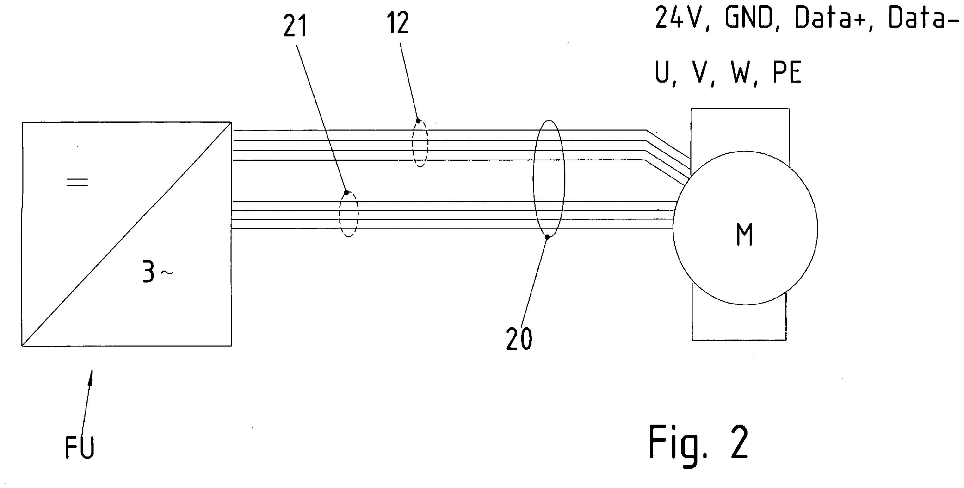

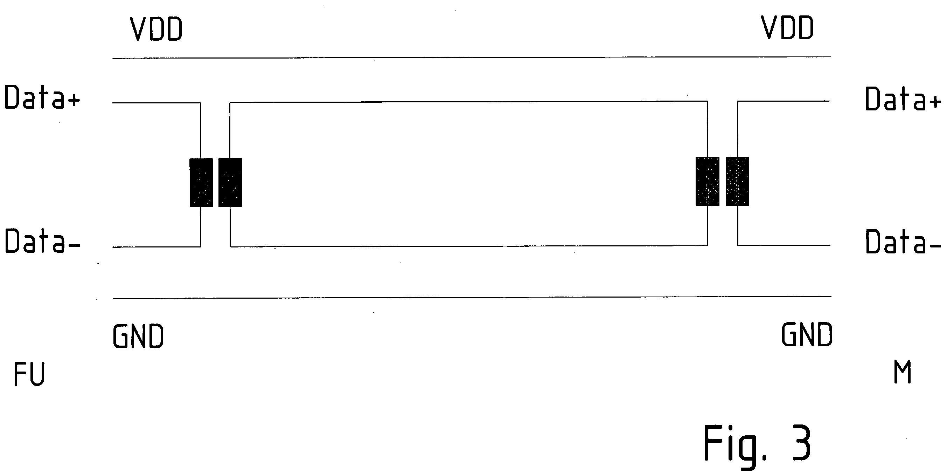

Bei der Erfindung gemäß den Figuren 2 und 3 wird im Unterschied zum Stand der Technik nach Figur 1 nur ein einziges Hybridkabel verwendet. Somit ist auch nur ein Hybridsteckverbinder zum Motor und/oder Hybridsteckverbinder zum Umrichter notwendig.

Dabei umfasst das Hybridkabel die Starkstromleitungen U,V,W, PE und zusätzlich nur wenige Schwachstromleitungen. Dabei sind als Schwachstromleitungen in einem ersten Ausführungsbeispiel gemäß Figur 2 und 3 nur zwei Leitungen Data+ und Data- für eine differentielle Signalübertragung notwendig zusammen mit Versorgungsleitungen GND und VDD.

Wie in Figur 3 gezeigt ist eine galvanische Trennung, also Potentialtrennung, durch Verwendung eines umrichterseitigen und eines motorseitigen Transformators realisiert.

Durch Verwendung des Manchester Codes als Codierung bei der Signalübertragung ist sichergestellt, dass die zeitlichen Abschnitte mit negativer und positiver Spannung gleich lang sind und die Transformatoren nicht gesättigt werden. Die Daten sind hierbei als Datenwort anordenbar, wobei jedes Datenwort beispielhaft zusammengesetzt ist, indem in einem ersten Wortanteil bremsenbezogene Daten, in einem zweiten Wortanteil temperatursensorbezogene Daten und in einem dritten Wortanteil winkelsensorbezogene Daten angeordnet werden. Die Kommunikation über die Signalleitungen ist bidirektional ausführbar, so dass die temperatursensorbezogenen Daten und winkelsensorbezogenen Daten vom Motor M an den Umrichter FU und die bremsenbezogenen Daten vom Umrichter FU an den Motor M übertragen werden.

Über diese Schnittstelle zwischen Umrichter und Motor können nun die Prozessdaten Lage und Temperatur vom Motor zum Umrichter übertragen und das Prozessdatum "Bremse ein " oder "Bremse aus" codiert vom Umrichter FU zum Motor M übertragen werden.

Über die Schwachstrom-Versorgungsleitungen ist die Bremse, der Temperatursensor und/oder der Geber versorgbar. Hierzu werden beispielhaft 24 Volt zwischen VDD und GND angelegt.

Die Bremse umfasst hierbei eine elektronische Schaltung, welche einen Elektromagneten der Bremse ansteuert. Hierzu wird die elektronische Schaltung über die genannten Schwachstrom-Versorgungsleitungen VDD und GND versorgt. Ein von der elektronischen Schaltung umfasster Leistungshalbleiterschalter steuert den Strom des Elektromagneten und empfängt sein Ansteuersignal über die Signalleitungen Data+ und Data-.

Die motorseitige und/oder umrichterseitige galvanische Trennung vermindert Störsignaleinwirkungen.

Vorzugsweise ist im Motor M eine Leiterplatte angeordnet, welcher die Signale der Sensoren zugeführt werden und von welcher dem Elektromagneten der Bremse, also des Aktors, sein ihm zugeordneter Steuerstrom zugeführt wird. Hierzu wird als am Motorgehäuse ein Hybridsteckverbinderteil angeordnet, in welches das Hybridkabel 20 mittels eines entsprechenden an einem Endbereich des Hybridkabels 20 angeordneten Gegensteckverbinderteils steckverbindbar ist und die zugehörigen Leitungen vom Steckverbinderteil zur Leiterplatte durchgeleitet werden.

Das Hybridkabel 20 umfasst vier Leitungen 21 für Schwachstrom, insbesondere zwei Leitungen für die differentielle Signalübertragung und zwei Leitungen für die Versorgungsspannungsdurchleitung, und Leitungen 22 für Leistung, insbesondere Starkstrom, also Motorphasen U, V, W und Nullleiter PE.

Vorteiligerweise ist hierbei die Leiterplatte mit auf ihr bestückten elektronischen Bauelementen als Teil des Winkelsensors ausführbar. Wenn nämlich auf der Leiterplatte magnetfeldsensitive Sensoren, insbesondere Hallsensoren und/oder Wiegandsensoren, angeordnet werden und die Leiterplatte derart im Motor angeordnet wird, dass diese magnetfeldsensitiven Sensoren einem drehenden, mit der Rotorwelle des Motors drehfest verbundenen Teil gegenüberstehend angeordnet sind, sind auf dem drehenden Teil Dauermagnete anordenbar, die von den magnetfeldsensitiven Sensoren detektierbar sind und somit die Winkelstellung erfassbar ist. Die Leiterplatte ist dabei beispielhaft an einem Flanschteil oder sonstigen Gehäuseteil des Motors befestigbar. Somit sind dieser Leiterplatte auch die weiter zugeleiteten Sensorsignale zuleitbar, insbesondere also diejenigen des Temperatursensors. Von der Leiterplatte ausgehend ist auch der Steuerstrom für den Elektromagneten der Bremse steuerbar. Vorzugsweise ist also auf der Leiterplatte auch eine elektronische Schaltung oder ein Bauteil vorsehbar, das als Umsetzer bezeichnet wird und eine Schnittstelle zwischen den Sensorsignalen und den Signalleitungen Data+ und Databildet. Somit ist ein Zusammenfassen der ausgehenden Datenströme und ein Separieren des eingehenden Datenstroms direkt auf derjenigen Leiterplatte ermöglicht, die auch die zur Detektion der Dauermagneten des drehenden Teils entsprechend bestückt ist. Somit ist eine bidirektionale Datenübertragung ermöglicht. Auf der Leiterplatte ist auch ein Speicher vorgesehen, dem über die Signalleitungen abzuspeichernde Parameter zuleitbar sind. Somit ist bei dem Betrieb des Winkelsensors eine Berücksichtigung dieser Parameter ermöglicht. Außerdem sind motorbezogene Daten in diesem Speicher, der vorzugsweise als Langzeitspeicher, wie EEPROM oder dergleichen, ausgeführt wird oder zumindest einen solchen Speicheranteil umfasst, so dass auch bei Stromausfall die gespeicherten Parameter nicht verloren gehen.

Als drehendes Teil ist vorzugsweise ein Lüfter verwendet, wobei die Dauermagnete im Lüfterring und/oder in den Lüfterflügeln und/oder in einem am Außenumfang angeordneten Luftleitring des Lüfters angeordnet sind.

Bei weiteren erfindungsgemäßen Ausführungsbeispielen sind nicht nur die genannten Sensoren, also Temperatursensor und Winkelsensor, vorgesehen sondern auch weitere Sensoren, deren Daten dann ebenfalls über die Signalleitungen übertragen werden. Außerdem ist nicht nur die Bremse als Aktor sondern es sind auch weitere Aktoren vorsehbar, wobei die zugehörigen Daten ebenfalls über die Signalleitungen übertragen werden. Hierzu ist wiederum einen bidirektionale Kommunikation ausführbar. Vorzugsweise wird ein half-Duplex-Verfahren hierbei verwendet.

Bei weiteren erfindungsgemäßen Ausführungsbeispielen werden zwei weitere Schwachstromleitungen als Signalleitungen im Hybridkabel angeordnet

### Bezugszeichenliste

1 Leitungen für Winkelsensor
2 Leitungen für Temperatursensor
3 Leitungen für Bremse
4 Leitungen für Leistung, insbesondere Starkstrom
5 Hybridkabel für Leistung und Bremse
6 Kabel für Sensoren
20 Hybridkabel
21 Leitungen für Schwachstrom
22 Leitungen für Leistung, insbesondere Starkstrom

M Elektromotor
FU Umrichter

## Patentansprüche

1. Antriebssystem, das zumindest einen Elektromotor (M) aufweist, welcher von einem Umrichter (FU) gespeist wird,
wobei am Motor zumindest ein Sensor und ein Aktor angeordnet sind,
wobei der Umrichter (FU) und der Motor über ein Hybridkabel (5, 20) verbunden sind,
wobei das Hybridkabel (5, 20) Starkstromleitungen und Schwachstromleitungen aufweist,
**wobei** als Schwachstromleitungen zumindest zwei oder nur eine oder zwei Signalleitungen und zwei Versorgungsleitungen, insbesondere zur 24 Volt -Versorgung, verwendet sind,
wobei über die Signalleitungen die von den Sensoren erfassten Werte und, - insbesondere zeitlich versetzt - , die für den Aktor bestimmten Ansteuerdaten übertragbar sind, wobei **über die Schwachstrom-Versorgungsleitungen der Aktor und der Geber versorgt sind, wobei im Motor ein ansteuerbarer Halbleiterschalter angeordnet ist, dem das Ansteuersignal vom Umrichter (FU) über die Signalleitungen des Hybridkabels (5, 20) zuführbar ist und welcher den dem Elektromagneten der Bremse zugeführten Strom steuert,**
**wobei im Motor eine Leiterplatte angeordnet ist, insbesondere an einem zumindest teilweise gehäusebildenden Teil, und auf der Leiterplatte der Halbleiterschalter bestückt ist,**
**wobei auf der Leiterplatte ein Umsetzer angeordnet ist, welcher die über die Signalleitungen als digitale Information übertragenen Daten empfängt und daraus die Ansteuerinformationen für den Aktor, insbesondere den Halbleiterschalter, herausfiltert und die von den Sensoren, insbesondere Winkelsensor und Temperatursensor, zugeleiteten Signale als digitalen Datenstrom über die Signalleitungen an den Umrichter (FU) leitet,**
**wobei auf der Leiterplatte auch ein magnetfeldsensitiver Sensor, insbesondere Hallsensor und/oder Wiegandsensor, bestückt ist, welcher einem drehbar gelagerten Teil gegenüberstehend angeordnet ist, wobei am drehbar gelagerten Teil Dauermagnete angeordnet sind, die von dem magnetfeldsensitiven Sensor detektierbar sind beim Vorbeidrehen, dadurch gekennzeichnet, dass ein Zusammenfassen der ausgehenden Datenströme und ein Separieren des eingehenden Datenstroms direkt auf derjenigen Leiterplatte** ermöglicht ist, **die zur Detektion der Dauermagneten des drehenden Teils entsprechend bestückt ist,**
**wobei ein Mittel zur galvanischen Trennung, nämlich ein Transformator, zwischen Motor und Leitungen (1) des Hybridkabels (5, 20), insbesondere Schwachstromleitungen des Hybridkabels (5, 20), angeordnet ist,**
**wobei die Signalleitungen als differentielle Signalübertragungsleitungen fungieren.**

2. Antriebssystem nach Anspruch 1,
**dadurch gekennzeichnet, dass**
am Motor ein Temperatursensor, insbesondere ein in den Statorwicklungen des Motors angeordneter Temperatursensor, und/oder ein Winkelsensor angeordnet ist und als Aktor eine elektromagnetisch betätigbare Bremse, deren Bremsmoment der Rotorwelle des Motors zuleitbar ist.

3. Antriebssystem nach mindestens einem der vorangegangenen Ansprüche,
**dadurch gekennzeichnet, dass**
das Hybridkabel (5, 20) über eine Steckverbindung mit dem Motor und/oder über eine andere Steckverbindung mit dem Umrichter (FU) verbunden ist.

4. Antriebssystem nach mindestens einem der vorangegangenen Ansprüche,
**dadurch gekennzeichnet, dass**
die Starkstromleitungen die Motorphasen-Zuleitungen (U,V,W,) und einen Nullleiter (PE) umfassen.

5. Antriebssystem nach mindestens einem der vorangegangenen Ansprüche,
**dadurch gekennzeichnet, dass**
im Hybridkabel (5, 20) zwei weitere Signalleitungen angeordnet sind, so dass das Antriebssystem in sicherheitsgerichteten Anlagen betreibbar ist,
insbesondere wobei der digitale Datenstrom redundant übertragen wird oder Prüfinformationen über den digitalen Datenstrom übertragen werden.

6. Verfahren zum Betreiben eines Antriebssystems nach mindestens einem der vorangegangenen Ansprüche,
**dadurch gekennzeichnet, dass**
auf den Signalleitungen Daten derart digital codiert übertragen werden, dass die zeitlichen Abschnitte negativer und positiver Spannung gleich lang sind,
**wobei die zeitlichen Abschnitte jeweils derart kurz sind, dass als Mittel zur galvanischen Trennung verwendete Transformatoren nicht gesättigt werden,**
**und wobei auf den Signalleitungen Daten im Manchestercode übertragen werden,**
**wobei die Daten bidirektional übertragen werden, insbesondere wobei ein half Duplex Verfahren verwendet werden,**
**wobei die Daten der Sensoren und Aktoren seriell hintereinander in einem Datenwort übertragen werden.**

## Claims

1. Drive system which comprises at least one electric motor (M) which is fed by a converter (FU),
wherein at least one sensor and one actuator are arranged on the motor,
wherein the converter (FU) and the motor are connected via a hybrid cable (5, 20),
wherein the hybrid cable (5, 20) comprises high-current lines and low-current lines,
wherein at least two or only one or two signal lines and two supply lines, in particular for 24 volt supply, are used as low current lines,
wherein the values acquired by the sensors and, - in particular temporally offset -, the control data determined for the actuator are transmittable via the signal lines,
wherein the actuator and the transducer are supplied via the low-current supply lines,
wherein in the motor a controllable semiconductor switch is arranged, to which the control signal is suppliable from the converter (FU) via the signal lines of the hybrid cable (5, 20) and which controls the current supplied to the electromagnet of the brake,
wherein in the motor a printed circuit board is arranged, in particular on an at least partially housing-forming part, and the semiconductor switch is fitted on the printed circuit board,
wherein on the printed circuit board is arranged a converter which receives the data transmitted via the signal lines as digital information and filters out therefrom the control information for the actuator, in particular the semiconductor switch, and forwards the signals, supplied by the sensors, in particular angle sensor and temperature sensor, as a digital data stream via the signal lines to the converter (FU),
wherein a magnetic field-sensitive sensor, in particular Hall sensor and/or Wiegand sensor, is also fitted on the printed circuit board, which sensor is arranged opposite a rotatably mounted part, there being arranged on the rotatably mounted part permanent magnets which are detectable by the magnetic field-sensitive sensor as they rotate past,
**characterised in that**
a combining of the outgoing data streams and a separating of the incoming data stream is made possible directly on that printed circuit board which is appropriately fitted for detecting the permanent magnets of the rotating part,
wherein a means for galvanic isolation, namely a transformer, is arranged between the motor and the lines (1) of the hybrid cable (5, 20), in particular the low-current lines of the hybrid cable (5, 20),
wherein the signal lines function as differential signal transmission lines.

2. Drive system according to claim 1,
**characterised in that**
on the motor a temperature sensor, in particular a temperature sensor arranged in the stator windings of the motor, and/or an angle sensor is arranged and as the actuator an electromagnetically actuatable brake, the braking torque of which is suppliable to the rotor shaft of the motor.

3. Drive system according to at least one of the preceding claims,
**characterised in that**
the hybrid cable (5, 20) is connected via a plug connection to the motor and/or via another plug connection to the converter (FU).

4. Drive system according to at least one of the preceding claims,
**characterised in that**
the high-current lines comprise the motor-phase supply lines (U,V,W,) and a neutral conductor (PE).

5. Drive system according to at least one of the preceding claims,
**characterised in that**
two further signal lines are arranged in the hybrid cable (5, 20), so that the drive system is operable in safety-oriented systems,
in particular wherein the digital data stream is transmitted redundantly or check information is transmitted via the digital data stream.

6. Method for operating a drive system according to at least one of the preceding claims,
**characterised in that**
on the signal lines data is transmitted in such a digitally encoded way that the time periods of negative and positive voltage are of equal length,
wherein the time periods are in each case so short that transformers used as means for galvanic isolation are not saturated,
and wherein on the signal lines data is transmitted in the Manchester code,
wherein the data is transmitted bidirectionally, in particular wherein a half-duplex method is used,
wherein the data of the sensors and actuators is transmitted serially one after another in a data word.

## Revendications

1. Système d'entraînement équipé d'au moins un moteur électrique (M) alimenté par un onduleur (FU),
au moins un capteur et un actionneur étant disposés sur ledit moteur,
l'onduleur (FU) et le moteur étant raccordés par l'intermédiaire d'un câble hybride (5, 20),
ledit câble hybride (5, 20) comprenant des conducteurs de courant fort et des conducteurs de courant faible,
au moins deux ou un seulement, voire deux conducteurs de signaux et deux conducteurs d'alimentation notamment dévolus à l'alimentation en 24 volts, étant utilisés en tant que conducteurs de courant faible,
lesdits conducteurs de signaux permettant la transmission des valeurs détectées par les capteurs et - en particulier avec décalage dans le temps - des données de pilotage destinées à l'actionneur,
l'actionneur et l'émetteur étant alimentés par l'intermédiaire des conducteurs d'alimentation en courant faible,
le moteur renfermant un commutateur à semi-conducteur qui peut être piloté, auquel le signal de pilotage émanant de l'onduleur (FU) peut être délivré par l'intermédiaire des conducteurs de signaux du câble hybride (5, 20), et qui commande le courant fourni à l'électro-aimant du frein,
sachant qu'une plaquette imprimée est logée dans ledit moteur, notamment sur une partie formant au moins partiellement un boîtier, et que ledit commutateur à semi-conducteur est implanté sur ladite plaquette imprimée,
sachant qu'un convertisseur, implanté sur ladite plaquette imprimée, reçoit les données transmises par l'intermédiaire des conducteurs de signaux en tant qu'information numérique ; filtre, sur cette base, les informations de pilotage dédiées à l'actionneur et en particulier audit commutateur à semi-conducteur ; et canalise vers l'onduleur (FU) en tant que flux de données numériques, par l'intermédiaire desdits conducteurs de signaux, les signaux délivrés par les capteurs, en particulier un capteur d'angles et un capteur de températures,
sachant que ladite plaquette imprimée est également garnie d'un capteur sensible aux champs magnétiques, en particulier d'un capteur à effet Hall et/ou d'un capteur à effet Wiegand qui est (sont) placé(s) en regard d'une partie montée à rotation, des aimants permanents, implantés sur ladite partie montée à rotation, pouvant être détectés par ledit capteur sensible aux champs magnétiques au cours de la rotation s'opérant en vis-à-vis,
**caractérisé par le fait que**
la possibilité est offerte de regrouper les flux de données sortants, et de scinder le flux de données entrant, directement sur la plaquette imprimée conséquemment garnie en vue de détecter les aimants permanents de la partie rotative,
un moyen de séparation galvanique, à savoir un transformateur, étant interposé entre le moteur et les conducteurs (1) du câble hybride (5, 20), notamment les conducteurs de courant faible dudit câble hybride (5, 20),
les conducteurs de signaux remplissant la fonction de conducteurs de transfert différentiel de signaux.

2. Système d'entraînement selon la revendication 1,
**caractérisé par le fait que**
le moteur offre place à un capteur de températures se présentant notamment comme un capteur de températures intégré dans les enroulements statoriques dudit moteur, et/ou à un capteur d'angles, et à un frein manoeuvrable électromagnétiquement, qui constitue un actionneur et dont le couple de freinage peut être appliqué à l'arbre rotorique dudit moteur.

3. Système d'entraînement selon au moins l'une des revendications précédentes,
**caractérisé par le fait que**
le câble hybride (5, 20) est raccordé au moteur par l'intermédiaire d'une connexion enfichable, et/ou à l'onduleur (FU) par l'intermédiaire d'une autre connexion enfichable.

4. Système d'entraînement selon au moins l'une des revendications précédentes,
**caractérisé par le fait que**
les conducteurs de courant fort incluent les conducteurs d'alimentation des phases (U, V, W) du moteur, et un conducteur neutre (PE).

5. Système d'entraînement selon au moins l'une des revendications précédentes,
**caractérisé par le fait que**
le câble hybride (5, 20) renferme deux conducteurs supplémentaires de signaux, de telle sorte que ledit système d'entraînement puisse être exploité dans des installations sécurisées,
sachant notamment que le flux de données numériques est transmis en mode redondant, ou que des informations de contrôle sont transmises par l'intermédiaire dudit flux de données numériques.

6. Procédé d'actionnement d'un système d'entraînement conforme à au moins l'une des revendications précédentes,
**caractérisé par le fait que**
des données sont transmises sur les conducteurs de signaux, en mode numérique codé, de façon telle que les périodes de tensions négative et positive présentent une même longueur,
sachant que lesdites périodes sont respectivement courtes de façon telle que des transformateurs, utilisés en tant que moyens de séparation galvanique, ne soient pas saturés,
et sachant que des données sont transmises en code Manchester sur lesdits conducteurs de signaux,
lesdites données étant transmises en mode bidirectionnel, notamment avec application d'un procédé en semi-duplex,
les données des capteurs et des actionneurs étant successivement transmises en mode sériel, dans un mot de données.
